# EUROPÄISCHE PATENTANMELDUNG

(11) **EP 0 585 726 A2**
(43) Veröffentlichungstag der Anmeldung: **09.03.1994**
(21) Anmeldenummer: 93113163.5
(22) Anmeldetag: 17.08.1993
(51) Int. Cl.: G01F 11/00, G01F 13/00, B01J 4/00, G05D 7/06, B05B 5/10, G01F 11/28

(54) **Dosierung flüssiger Substanzen**

(30) Priorität: 31.08.1992 DE 4229005
(71) Anmelder: Linde Aktiengesellschaft, D-65189 Wiesbaden (DE)
(72) Erfinder: Dürr, Dieter, Dipl.-Ing., D-82319 Starnberg (DE)
(74) Vertreter: Kasseckert, Rainer

(57) **Zusammenfassung**

Das Verfahren betrifft die Dosierung von flüssigen Substanzen, wobei die flüssige Substanz unter Tropfenablösung durch eine oder mehrere Austrittsöffnungen geführt wird und die Flüssigkeitsmenge über die Anzahl der erzeugten Tropfen gemessen wird. Flüssigkeitstropfen unterschiedlicher Größe machen eine genaue Dosierung unmöglich, da kein Rückschluß auf die exakte Flüssigkeitsmenge möglich ist. Erfindungsgemäß werden Tropfen homogener Dichte und konstanter Größe dadurch hergestellt, daß die Größe der sich ablösenden Tropfen durch ein im Bereich der Austrittsöffnungen erzeugtes elektrisches Feld eingestellt wird.

## Beschreibung

Die Erfindung betrifft ein Verfahren zur Dosierung flüssiger Substanzen, bei dem die flüssige Substanz unter Ablösung von Tropfen durch eine oder mehrere Austrittsöffnungen geführt wird und die Flüssigkeitsmenge über die Anzahl der erzeugten Tropfen gemessen wird.

Flüssigkeitsdosierungen dieser Art sind beispielsweise aus Laboren mit medizinischer, biologischer oder chemischer Fachrichtung bekannt. Flüssigkeiten der verschiedensten Arten werden mittels Pipetten o.ä. einer bestimmten Trägersubstanz zugegeben. Meist sind exakte Dosierungen der zugegebenen flüssigen Substanzen erwünscht. Auch verflüssigte Gase müssen häufig in genau abgestimmten Mengen beispielsweise einem Gas oder Gasgemisch zugegeben werden.

Problematisch ist die Dosierung der erwähnten flüssigen Substanzen, wenn kleinste Flüssigkeitsmengen mit geringen Fehlertoleranzen abzumessen sind. Wird nämlich die Flüssigkeitsmenge anhand der Anzahl der erzeugten Tropfen gemessen, oder sollen einzelne Tropfen bestimmter Größe reproduzierbar hergestellt werden, ist eine möglichst geringe Schwankung der Tropfengröße vonnöten.

Aufgabe vorliegender Erfindung ist deshalb, ein Verfahren zu entwickeln, mit dem eine flüssige Substanz über die Anzahl von Flüssigkeitstropfen genau dosiert werden kann, wobei die Flüssigkeitstropfen alle eine einheitliche Dichte und Größe aufweisen sollen. Die flüssige Substanz soll dabei unter Ablösung von Tropfen durch eine oder mehrere Austrittsöffnungen geführt und die Flüssigkeitsmenge über die Anzahl der erzeugten Tropfen gemessen werden.

Diese Aufgabe wird erfindungsgemäß dadurch gelöst, daß die Größe der Tropfen durch ein im Bereich der Austrittsöffnungen erzeugtes elektrisches Feld eingestellt wird.

Für die Größe von Flüssigkeitstropfen, die sich von einer Austrittsöffnung ablösen, sind im wesentlichen der Durchmesser dieser Austrittsöffnung sowie die Dichte und die Oberflächenspannung der Flüssigkeit maßgebend. Das Tropfenvolumen ist dabei näherungsweise proportional zum Durchmesser der Austrittsöffnung und zur Oberflächenspannung und umgekehrt proportional zur Dichte der Flüssigkeit.

Es hat sich gezeigt, daß die Größe der Flüssigkeitstropfen in einem großen Bereich durch Beeinflussung der Oberflächenspannung mittels eines elektrischen Feldes variiert werden kann, wenn der Öffnungsdurchmesser und die Flüssigkeitsdichte konstant bleiben.

Erfindungsgemäß wird zur Dosierung flüssiger Substanzen die Flüssigkeit unter Ablösung von Tropfen durch eine oder mehrere Austrittsöffnungen geführt. Im Bereich dieser Öffnungen wird ein elektrisches Feld erzeugt und mittels der elektrischen Feldstärke die gewünschte Tropfengröße eingestellt. Mittels einer geeigneten Vorrichtung zum Zählen von Tropfen läßt sich sodann die Flüssigkeitsmenge über die Anzahl der Tropfen messen.

Eine vorhergehende Eichung läßt sich beispielsweise dadurch vornehmen, daß für eine gegebene Flüssigkeit und einen gegebenen Durchmesser der Austrittsöffnung die Masse der Flüssigkeitsmenge von genügend vielen erzeugten Tropfen bei einer bestimmten Feldstärke gemessen wird. Auf diese Weise läßt sich jedem Feldstärkewert eine bestimmte Masse der erzeugten Tropfen zuordnen.

Durch kleine Variationen der elektrischen Feldstärke lassen sich geringe Änderungen der Masse der Flüssigkeitstropfen erzielen. Damit wird durch das erfindungsgemäße Verfahren eine äußerst genaue Dosierung flüssiger Substanzen möglich.

Vorzugsweise wird im Bereich der Austrittsöffnungen ein elektrisches Feld dadurch erzeugt, daß aus einem elektrisch leitenden Material bestehende Austrittsöffnungen an einen elektrischen Spannungspol gelegt werden. Der Gegenpol wird mit einer Elektrode verbunden, die sich in einem bestimmten Abstand gegenüber den Austrittsöffnungen befindet. Im Falle geringer Abstände von Gegenelektrode und Austrittsöffnungen ist vorteilhafterweise die Gegenelektrode mit Zwischenräumen ausgestattet, so daß die abgelösten Tropfen durch diese Zwischenräume ungehindert hindurchfallen können.

Die Flüssigkeit wird von ihrem eigenen hydrostatischen Druck oder mittels von außen zugeführter konstanter Druckkraft durch die Öffnungen gepreßt. Durch Variation der an den Austrittsöffnungen und an der Gegenelektrode anliegenden Spannung kann die Oberflächenspannung der Flüssigkeitstropfen und damit auch die Tropfengröße in einem großen Bereich fein gesteuert werden. Durch dieses erfindungsgemäße Verfahren lassen sich Tropfen mit einer Größe von unter 1 mm bis zu mehreren mm Durchmesser herstellen.

Das erfindungsgemäße Verfahren zum Dosieren flüssiger Substanzen läßt sich am wirkungsvollsten bei polaren Flüssigkeiten einsetzen. Die Oberflächenspannung läßt sich nämlich hier am stärksten beeinflussen. Insbesondere Wasser und Wasserlösungen stellen geeignete Substanzen dar.

Zur erfindungsgemäßen Flüssigkeitsdosierung bedient man sich vorteilhaft einer Vorrichtung, bestehend aus einer oder mehreren elektrisch leitenden Austrittsöffnungen für eine flüssige Substanz, die mit einem Pol einer Spannungsquelle verbunden sind, wobei dieser oder diesen Austrittsöffnungen gegenüber eine Elektrode angebracht ist, die mit dem zweiten Pol der Spannungsquelle verbunden ist und Zwischenräume für den ungehinderten Durchtritt der flüssigen Substanz aufweist.

Im folgenden soll ein Ausführungsbeispiel das erfindungsgemäße Verfahren näher erläutern.

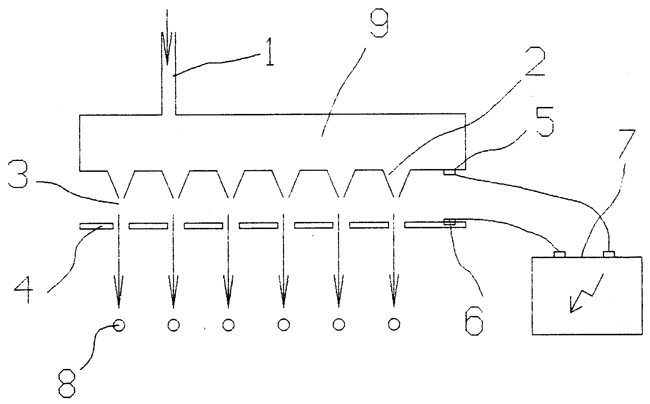

In der Zeichnung ist schematisch eine Anlage zur Dosierung flüssiger Substanzen gemäß dem geschilderten Verfahren dargestellt.

Es soll in eine Reihe nebeneinanderstehender Behälter eine exakt dosierte Menge einer chemischen Substanz in wässriger Lösung gefüllt werden. Dazu kann erfindungsgemäß die in der Zeichnung schematisch dargestellte Anlage eingesetzt werden.

Die Austrittsöffnungen 3 für die flüssige Substanz sind in diesem Fall düsenartig mit einem Durchmesser von etwa 1.5 mm ausgebildet und aus elektrisch leitendem Material herstellt. Der obere Innenraum 9 der Anlage wird durch die Leitung 1 mit der betreffenden Lösung versorgt. Da die Flüssigkeit von ihrem eigenen hydrostatischen Druck durch die Austrittsöffnungen 3 geleitet wird, ist auf eine konstante Füllhöhe im Innenraum 9 zu achten. Den Austrittsöffnungen 3 gegenüberliegend befindet sich als Elektrode 4 ein metallisches Gitter, dessen Zwischenräume unterhalb der durch die Pfeile markierten Austrittsrichtung der sich von den Austrittsöffnungen 3 ablösenden Flüssigkeitstropfen liegen, so daß diese ungehindert in die unteren nicht dargestellten Behälter fallen können.

Die Düsen 2 mit den Austrittsöffnungen 3 sind untereinander elektrisch verbunden und an den einen Pol einer Hochspannungsquelle 7 angeschlossen, deren zweiter Pol mit der Elektrode 4 elektrisch verbunden ist. Diese Anordnung kann im Bereich der Austrittsöffnungen 3 ein starkes elektrisches Feld erzeugen.

Die Tropfengröße wird erfindungsgemäß durch die an den Austrittsöffnungen 3 und der Elektrode 4 anliegende Hochspannung gesteuert. Diese Spannung kann bis knapp unterhalb der Durchschlagsspannung eingestellt werden. Ohne angelegte Spannung erhält man für wässrige Lösungen Tropfengrößen von etwa 4 mm Durchmesser, mit wachsender Spannung, bis auf etwa 10 kV pro cm des Abstands Austrittsöffnung 3 zu Elektrode 4, läßt sich die Tropfengröße auf unter 1 mm Durchmesser reduzieren.

Nach entsprechender Eichung läßt sich jedem Spannungswert an der Hochspannungsquelle 7 eine bestimmte Größe und Masse der Flüssigkeitstropfen 8 zuordnen.

Je nach gewünschter Flüssigkeitsmenge wird eine bestimmte Anzahl von Tropfen in die unterhalb der Austrittsöffnungen 3 befindlichen Behälter geleitet.

Das erfindungsgemäße Verfahren läßt sich im industriellen Maßstab einsetzen, ist kostengünstig und sowohl zeitsparender als auch zuverlässiger als sonstige bekannte Dosierungsverfahren.

## Patentansprüche

1. Verfahren zur Dosierung flüssiger Substanzen, bei dem die flüssige Substanz unter Ablösung von Tropfen durch eine oder mehrere Austrittsöffnungen geführt wird und die Flüssigkeitsmenge über die Anzahl der erzeugten Tropfen gemessen wird, **dadurch gekennzeichnet**, daß die Größe der Tropfen (8) durch ein im Bereich der Austrittsöffnungen (3) erzeugtes elektrisches Feld eingestellt wird.

2. Verfahren nach Anspruch 1, dadurch gekennzeichnet, daß das elektrische Feld durch Anlegen elektrischer Spannung an elektrisch leitende Austrittsöffnungen (3) erzeugt wird.

3. Vorrichtung zur Durchführung des Verfahrens nach einem der Ansprüche 1 bis 2, dadurch gekennzeichnet, daß eine oder mehrere elektrisch leitende Austrittsöffnungen (3) für eine flüssige Substanz mit einem Pol einer Spannungsquelle (7) verbunden sind, und daß dieser oder diesen Austrittsöffnungen (3) gegenüber eine Elektrode (4) angebracht ist, die mit dem zweiten Pol der Spannungsquelle (7) verbunden ist und Zwischenräume für den ungehinderten Durchtritt der flüssigen Substanz aufweist.
